# EUROPEAN PATENT SPECIFICATION

(11) **EP 2 755 122 B1**
(45) Date of publication and mention of the grant of the patent: **04.03.2020**
(21) Application number: 13150918.4
(22) Date of filing: 11.01.2013
(51) Int. Cl.: G06F 3/0488, G06F 3/038, G06F 3/041, G06F 3/0354, G06F 3/0484

(54) **Apparatus and method pertaining to a stylus-initiated opening of an application**
Vorrichtung und Verfahren betreffend eine Stift-initiierte Öffnung einer Anwendung
Appareil et procédé se rapportant à une ouverture initialisée par stylet d'une application

(43) Date of publication of application: 16.07.2014
(73) Proprietor: BlackBerry Limited, Waterloo, ON N2K 0A7 (CA)
(72) Inventor: Idzik, Jacek S., Waterloo, Ontario N2L 3W8 (CA); Mankowski, Peter, Waterloo, Ontario N2L 3W8 (CA); Mercea, Cornel, Waterloo, Ontario N2L 3W8 (CA)
(74) Representative: Vigand, Philippe

(56) References cited:
- EP-A1- 2 541 402
- WO-A2-2010/040670
- US-A1- 2009 006 991
- US-A1- 2012 023 573
- US-B1- 7 479 943

## Description

### Field of Technology

The present disclosure relates to styli employed as a user interface to a corresponding electronic device.

### Background

Various styli are known and typically serve in conjunction with a scribing surface that is configured to work with a corresponding stylus. Generally speaking, a stylus is typically a hand-held writing utensil that often (but not exclusively) has a pencil-like elongated form factor and that includes at least one pointed end configured to interact with the scribing surface. Using a stylus as an input mechanism with, for example, a display offers a variety of advantages over a fingertip including the opportunity for increased precision as well as an expression modality that accords with the user's own past experience with a pencil or pen.

That said, there are times when a finger-based user-interface modality may be preferred, at least by some users. In many such cases the user has corresponding preferences. That is, a given user might prefer to use a stylus-based approach with one application but a finger-based approach with another application.

Many electronic devices have both an active mode of operation and a standby mode of operation. Generally speaking, during the active mode of operation the electronic device is "on" in that the electronic device is presently ready to respond to a full panoply of user inputs and instructions. The standby mode of operation typically serves, however, to greatly reduce the electronic device's use of power. Accordingly, during the standby mode of operation the ability of the electronic device to provide information and to respond to user inputs is reduced in some meaningful way. Often (though not always), for example, the electronic device's display will be blank or even "off' and at least some user-input interfaces will not serve in their usual manner.

The specifics of what constitutes a standby mode of operation varies from one device to the next. Some devices may even support a number of different standby modes of operation. Again, however, a device's standby mode of operation is characterized by a reduced quiescent consumption of power as compared to the quiescent consumption of power during the active mode of operation, and the user interface itself offers reduced opportunities for user input.

It is known in the art to awaken an electronic device from a standby mode using a stylus. While useful in and of itself, in many cases present practices in these regards do not meet all potential user needs in all application settings.

US 2009/006991 relates to a method for unlocking a touch screen device includes providing a touch screen device in an idle mode. An area or region displayed on a screen of the device in the idle mode is contacted or activated to reveal at least one application icon associated with an active/unlocked state of the device. The region is moved, expanded or dragged to an edge of the device to change a state of the device to an active/unlocked mode and activate the revealed application.

US 2012/023573 relates to a method, apparatus, and system for accessing at least a portion of a device based upon an access input. An access input is received. The access input includes information for gaining access to one or more functions of the device. A user access mode of the device is changed from a first access mode to a second access mode based upon at least in part on the access input. An application is selected in the device in response to changing from the first access mode to the second access mode. At least a portion of the output of the selected application is provided.

WO 2010/040670 relates to the system comprises the ability to detect certain gestures made by sliding a finger or stylus on a touch sensitive screen on a handheld device, even when a so called "screen lock" is active where the gesture is used to unlock the device and trigger the desired function associates with the gesture.

US 7479943 relates to an embodiment, an electronic system includes a data input device. The data input device includes a data input surface which is touch-sensitive. In addition, the data input device includes a removable template positioned over the data input surface. The removable template divides the data input surface into a first variable template input area and a second variable template input area. In an embodiment, the first input area comprises a handwriting recognition input area for detecting and facilitating recognition of one or more first gestures while the second variable template input area is configured to detect and facilitate recognition of one or more second gestures. The first and second variable template input areas can be implemented as any type of template. In another embodiment, a removable data input device includes a data input surface which is touch-sensitive. An electronic system includes the removable data input device. The data input surface includes a first variable template input area comprising a handwriting recognition input area for detecting and facilitating recognition of one or more first gestures and a second variable template input area for detecting and facilitating recognition of one or more second gestures. In this embodiment, the user changes the removable data input device in order to operate and control any one of a plurality of devices which are integrated into the electronic system or in order to change the data input methods available to the user.

EP 2541402 relates to a mobile terminal including a communication unit configured to communicate with at least one external terminal; a memory configured to store at least first and second operating systems including at least first and second modes, respectively; and a controller configured to activate the first mode using the first operating system, to display, in a first display region of a display unit of the mobile terminal, the activated first mode, and to display in a second display region of the display unit, at least one second indicator that when selected, activates a second corresponding application in the second mode.

The present invention is set out in the independent claims, with some optional features set out in the dependent claims.

### Brief Description of the Drawings

FIG. 1 is a flow diagram in accordance with the disclosure.
FIG. 2 is a block diagram in accordance with the disclosure.
FIG. 3 is a perspective view in accordance with the disclosure.
FIG. 4 is a perspective view in accordance with the disclosure.
FIG. 5 is a perspective view in accordance with the disclosure.
FIG. 6 is a block diagram in accordance with the disclosure.

### Detailed Description

The following describes an apparatus and method pertaining to pre-associating a particular application with the detection of a predetermined stylus action that occurs while a given electronic device is in a standby mode of operation. Upon then detecting that predetermined stylus action these teachings provide for responsively opening that particular application. The foregoing action can occur, by one approach, regardless of whether another application was already open. By one approach this opening of the particular application occurs in conjunction with switching the electronic device from the standby mode of operation to the active mode of operation.

These teachings are flexible in practice. For example, these teachings will accommodate a variety of approaches to selecting the application to be pre-associated with the predetermined stylus action. By one approach, for example, the pre-association can be based, at least in part, upon an automatic association based upon identifying the most-used application for the electronic device. As another example, the pre-association can be based, at least in part, upon a specific user-based selection.

These teachings are also highly scalable and will accommodate use with a wide variety and number of applications, styli, stylus actions, and/or electronic devices. The stylus action itself can be statically defined or can, if desired, be used defined and assigned.

So configured, a user can awaken an electronic device from a standby mode of operation using a stylus. Upon awakening the electronic device as described, a particular application is then open and available for use by the user without requiring the user to first otherwise locate the application (for example, by searching through a plurality of application icons). This convenience can in turn greatly increase a user's productivity and sense of satisfaction.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

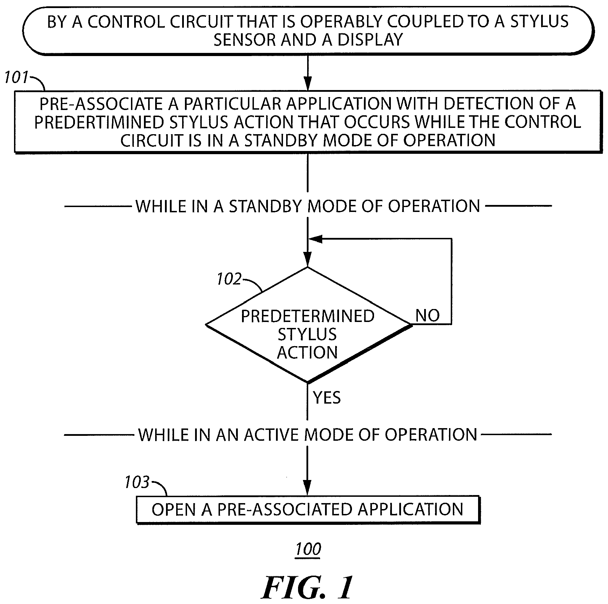

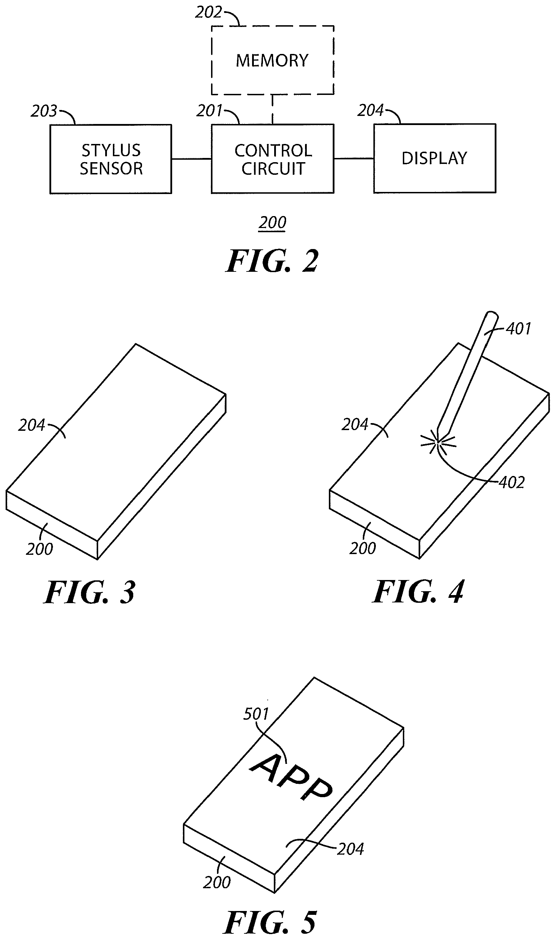

FIG. 1 presents a process 100 that corresponds to many of the present teachings. By one approach a control circuit carries out this process 100. Referring momentarily to FIG. 2, this control circuit 201 can comprise a part of an apparatus 200 such as a portable electronic device of choice. This control circuit 201 has both an active mode of operation and a standby mode of operation.

Such a control circuit 201 can comprise a fixed-purpose hard-wired platform or can comprise a partially or wholly programmable platform. These architectural options are well known and understood in the art and require no further description here. This control circuit 201 is configured (for example, by using corresponding programming as will be well understood by those skilled in the art) to carry out one or more of the steps, actions, and/or functions described herein.

By one optional approach this control circuit 201 can operably couple to a memory 202. This memory 202 may be integral to the control circuit 201 or can be physically discrete (in whole or in part) from the control circuit 201 as desired. This memory 202 can serve, for example, to non-transitorily store the computer instructions that, when executed by the control circuit 201, cause the control circuit 201 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

In this illustrative example the control circuit 201 also operably couples to a stylus sensor 203 and a display 204. Various approaches are known in the art that serve to detect a present location of a stylus (often the scribing tip of the stylus) with respect to a scribing surface (such as the surface of a touch-screen display). As the present teachings are not overly sensitive to any particular selections in these regards, further elaboration will not be provided here regarding these various approaches for the sake of brevity. Similarly, a variety of display technologies are known in the art as well. And again, as the present teachings will accommodate use with any of a variety of display technologies further details are not provided here except as appropriate to the specifics of a given illustrative embodiment.

In a typical application setting the aforementioned control circuit 201 has ready access to a plurality of applications. Generally speaking, applications comprise computer software designed to help a user perform specific tasks. Examples include but are certainly not limited to enterprise software, accounting software, office suites, graphics software, image-capture software, games, and media players. An application may reside in its entirety within such an apparatus 200 (for example, within the memory 202) or may reside at least partially remote from the apparatus 200 (as when the application resides in the so-called cloud). It is presumed here that a user can select and open a given application by selecting a corresponding unique icon or menu entry for that application in accordance with well-understood prior art technique.

Referring again to FIG. 1, at 101 this process 100 provides for pre-associating a particular application with the detection of a predetermined stylus action that occurs while the control circuit 201 is in a standby mode of operation. By one approach, the user specifies the pre-association. For example, as part of running a set-up wizard for the apparatus 200 in general and/or when loading and installing a new application the user can be provided with an opportunity (via, for example, the above-mentioned display 204) to specify that a particular application is to be pre-associated with the aforementioned stylus action. So configured, and by way of example, a user could so pre-associate a word-processing application as being the particular application.

By another approach the pre-association can occur automatically. As one example in these regards the control circuit 201 can maintain at least some history regarding the number of times various applications are opened and/or the length of time that the user leaves such applications open. That information can then be used to identify, for example, a most-used application. The control circuit 201 can then, for example, pre-associate that most-used application with the aforementioned predetermined stylus action. Such an automated approach can be dynamically updated if desired using any schedule or trigger criterion of choice. For example, the pre-association can be automatically updated whenever a given application becomes the presently most-used application. By another approach such an assessment can occur per some schedule (such as on a daily, weekly, or monthly schedule).

The predetermined stylus action can comprise any of a wide variety of actions. (As used herein, the word "predetermined" will be understood to refer to a time prior to a current time of need.) For many application settings it will suffice if the predetermined stylus action comprises a tap of the stylus on the display 204. Other examples of possibly useful predetermined stylus actions would include a double-tap, triple-tap, or the like, a straight-line swipe, a swipe that scribes a specific shape such as a circle (clockwise or counter-clockwise as desired), and so forth.

Having made this pre-association, as some subsequent time the control circuit 201 enters its standby mode of operation. As illustrated in FIG. 3, during this standby mode of operation the display 204 may be dark and essentially powered down.

Referring to both FIGS. 1 and 4, at 102 the control circuit 201 detects the aforementioned predetermined stylus 401 action (which, in this illustrative example, comprises a single tap 402 of the stylus 401 on the display 204). (Such an approach presumes, of course, that the control circuit 201 is configured to make a sufficient-enough use of the stylus sensor 203 while in the standby mode of operation to detect that stylus action.)

Referring to FIGS. 1 and 5, at 103 the control circuit 201 then responds by opening the pre-associated application 501 that corresponds to the predetermined stylus action (typically in conjunction with switching from the standby mode of operation to the active mode of operation). So configured, and regardless of whatever application(s) might have been opened at the time the control circuit 201 switched to its standby mode of operation, the pre-associated application 501 is opened and now available to the user by having taken this one simple action.

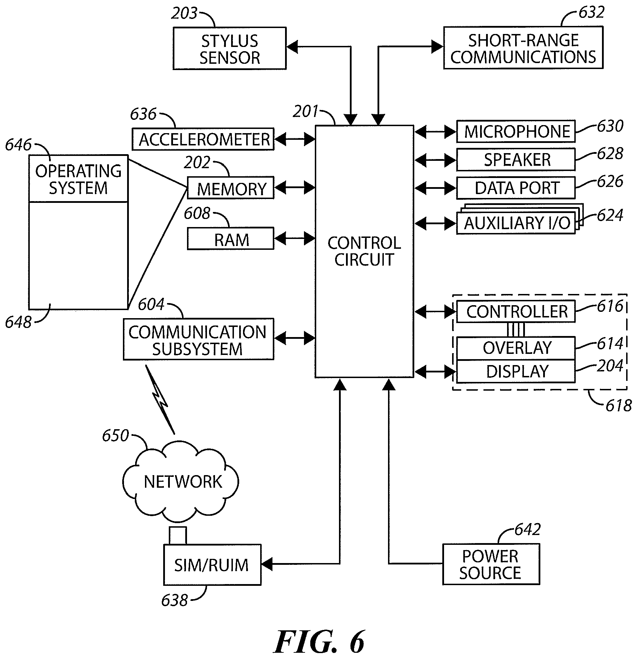

As noted above the enabling apparatus 200 can comprise a portable electronic device. By one illustrative approach the portable electronic device comprises a portable communications device as shown in FIG. 6. Corresponding communication functions, including data and voice communications, are performed through a communication subsystem 604 that operably couples to the control circuit 201. The communication subsystem receives messages from and sends messages to a wireless network 650.

The wireless network 650 may be any type of wireless network, including, but not limited to, a wireless data networks, a wireless voice network, or a network that supports both voice and data communications. The control circuit 201 may also operably couple to a short-range communication subsystem 632 (such as an 802.11 or 802.16-compatible transceiver and/or a Bluetooth™-compatible transceiver). To identify a subscriber for network access, the portable electronic device may utilize a Subscriber Identity Module or a Removable User Identity Module (SIM/RUIM) card 638 for communication with a network, such as the wireless network 650. Alternatively, user identification information may be programmed into the aforementioned memory 202.

A power source 642, such as one or more rechargeable batteries or a port to an external power supply, powers the electronic device. The control circuit 201 may interact with an accelerometer 636 that may be utilized to detect direction of gravitational forces or gravity-induced reaction forces. The control circuit 201 also interacts with a variety of other components, such as a Random Access Memory (RAM) 608, an auxiliary input/output (I/O) subsystem 624, a data port 626, a speaker 628, a microphone 630, and the aforementioned stylus sensor 203.

The aforementioned display 204 can be disposed in conjunction with a touch-sensitive overlay 614 that operably couples to an electronic controller 616. Together these components can comprise a touch-sensitive display 618 that serves as a graphical-user interface. Information, such as text, characters, symbols, images, icons, and other items may be displayed on the touch-sensitive display 618 via the control circuit 201.

The portable electronic device includes an operating system 646 and software programs, applications, or components 648 that are executed by the control circuit 201 and are typically stored in a persistent, updatable store such as the memory 202. Additional applications or programs may be loaded onto the portable electronic device through the wireless network 650, the auxiliary I/O subsystem 624, the data port 626, or the short-range communications subsystem 632.

As a communication device, a received signal such as a text message, an e-mail message, or web page download is processed by the communication subsystem and input to the control circuit 201. The control circuit 201 processes the received signal for output to the display 204 and/or to the auxiliary I/O subsystem 624. A user may generate data items, for example e-mail messages, that may be transmitted over the wireless network 650 through the communication subsystem. For voice communications, the overall operation of the portable electronic device is similar. The speaker 628 outputs audible information converted from electrical signals, and the microphone 630 converts audible information into electrical signals for processing.

So configured, a portable electronic device (such as but not limited to a so-called smartphone or pad/tablet-styled computer) can support the aforementioned approach to permitting the user to awaken the device via a simple stylus action that also causes a particular, predetermined and pre-associated application to open as well. Such an approach can improve user productivity and satisfaction.

The present disclosure may be embodied in other specific forms without departing from its essential characteristics. For example, these teachings will accommodate specifying a plurality of different stylus actions and pre-associating a different application with each such action. So configured, and by way of example, the user might open an email application by employing a single tap and might open a camera application by employing a double tap.

The described embodiments are therefore to be considered in all respects only as illustrative and not restrictive. The scope of the disclosure is, therefore, indicated by the appended claims rather than by the foregoing description.

## Claims

1. An apparatus (200) comprising:
a stylus sensor (203);
a display (204);
a control circuit (201) operably coupled to the stylus sensor (203) and the display (204), the control circuit (201) having a standby mode of operation during which the display is dark and an active mode of operation, the control circuit (201) being configured to:
pre-associate a most-used application of a plurality of applications with detection of a predetermined stylus action that occurs while the control circuit (201) is in the standby mode of operation, wherein the pre-association of the most-used application is an automatically updated association with the predetermined stylus action based upon identifying which of the plurality of applications is currently the most-used application for the apparatus;
detect via the stylus sensor (203) the predetermined stylus action while the control circuit (201) is in the standby mode of operation and responsively open the most-used application.

2. The apparatus (200) of claim 1 wherein the predetermined stylus action comprises a tap of the stylus (401) on the display (204).

3. The apparatus (200) of claim 1 wherein opening the most-used application comprises opening the most-used application regardless of whether another application was already open.

4. A method comprising:
by a control circuit (201) that is operably coupled to a stylus sensor (203) and a display (204), and while in a standby mode of operation during which the display is dark:
detecting via the stylus sensor (203) a predetermined stylus action;
responsively opening a pre-associated application (501), wherein the pre-associated application comprises a most-used application of a plurality of applications; in which the control circuit is arranged to automatically update the pre-association based upon identifying which application is currently the most-used application for the apparatus.

5. The method of claim 4 wherein the predetermined stylus action comprises a tap of the stylus (401) on the display (204).

6. The method of claim 4 wherein opening the pre-associated application (501) comprises opening the pre-associated application (501) regardless of whether another application was already open.

7. A non-transitory memory (202) having computer instructions stored therein for causing a control circuit (201) to:
detect via a stylus sensor (203) a predetermined stylus action while the control circuit (201) is in a standby mode of operation during which a corresponding display is dark and responsively open a pre-associated application (501) via the display, wherein the pre-associated application comprises an application determined to be a most-used application of a plurality of applications; and in which a determination of which application is currently the most-used application is dynamically updated.

8. The non-transitory memory (202) of claim 7 wherein the predetermined stylus action comprises a tap of the stylus (401) on a display (204).

9. The non-transitory memory (202) of claim 7 wherein opening the pre-associated application (501) comprises opening the pre-associated application (501) regardless of whether another application was already open.

## Patentansprüche

1. Vorrichtung (200), die Folgendes umfasst:
einen Eingabestiftsensor (203);
eine Anzeige (204);
eine Steuerschaltung (201), die an den Eingabestiftsensor (203) und die Anzeige (204) wirkgekoppelt ist, wobei die Steuerschaltung (201) einen Betriebsbereitschaftsmodus, in dem die Anzeige dunkel ist, und einen aktiven Betriebsmodus aufweist, wobei die Steuerschaltung (201) zu Folgendem ausgelegt ist:
Vorverknüpfen einer am meisten verwendeten Anwendung einer Vielzahl von Anwendungen mit Detektion einer vorbestimmten Eingabestiftaktion, die erfolgt, während die Steuerschaltung (201) im Betriebsbereitschaftsmodus ist, wobei die Vorverknüpfung der am meisten verwendeten Anwendung eine automatisch aktualisierte Verknüpfung mit der vorbestimmten Eingabestiftaktion auf Basis des Identifizierens ist, welche der Vielzahl von Anwendungen die am meisten verwendete Anwendung für die Vorrichtung ist;
Detektieren der vorbestimmten Eingabestiftaktion via den Eingabestiftsensor (203), während die Steuerschaltung (201) im Betriebsbereitschaftsmodus ist, und reagierendes Öffnen der am meisten verwendeten Anwendung.

2. Vorrichtung (200) nach Anspruch 1, wobei die vorbestimmte Eingabestiftaktion ein Tippen des Eingabestifts (401) auf die Anzeige (204) umfasst.

3. Vorrichtung (200) nach Anspruch 1, wobei das Öffnen der am meisten verwendeten Anwendung das Öffnen der am meisten verwendeten Anwendung unabhängig davon, ob eine andere Anwendung bereits geöffnet war, umfasst.

4. Verfahren, das Folgendes umfasst:
durch eine Steuerschaltung (201), die an einen Eingabestiftsensor (203) und eine Anzeige (204) wirkgekoppelt ist und sich im Betriebsbereitschaftsmodus befindet, in dem die Anzeige dunkel ist:
Detektieren einer vorbestimmten Eingabestiftaktion via den Eingabestiftsensor (203);
reagierendes Öffnen einer vorverknüpften Anwendung (501), wobei die vorverknüpfte Anwendung eine am meisten verwendete Anwendung einer Vielzahl von Anwendungen umfasst; in dem die Steuerschaltung angeordnet ist, die Vorverknüpfung auf Basis des Identifizierens, welche Anwendung derzeit die am meisten verwendete Anwendung für die Vorrichtung ist, automatisch zu aktualisieren.

5. Verfahren nach Anspruch 4, wobei die vorbestimmte Eingabestiftaktion ein Tippen des Eingabestifts (401) auf die Anzeige (204) umfasst.

6. Verfahren nach Anspruch 4, wobei das Öffnen der vorverknüpften Anwendung (501) das Öffnen der vorverknüpften Anwendung (501) unabhängig davon, ob eine andere Anwendung bereits geöffnet war, umfasst.

7. Nichttransitorischer Speicher (202), in dem Computeranweisungen zum Veranlassen einer Steuerschaltung (201) zu Folgendem gespeichert sind:
Detektieren einer vorbestimmten Eingabestiftaktion via einen Eingabestiftsensor (203), während die Steuerschaltung (201) in einem Betriebsbereitschaftsmodus ist, in dem eine Anzeige dunkel ist, und reagierendes Öffnen einer vorverknüpften Anwendung (501) via die Anzeige, wobei die vorverknüpfte Anwendung eine Anwendung umfasst, von der bestimmt wird, dass sie eine am meisten verwendete Anwendung einer Vielzahl von Anwendungen ist; und in dem eine Bestimmung, welche Anwendung die derzeit am meisten verwendete Anwendung ist, dynamisch aktualisiert wird.

8. Nichttransitorischer Speicher (202) nach Anspruch 7, wobei die vorbestimmte Eingabestiftaktion ein Tippen des Eingabestifts (401) auf eine Anzeige (204) umfasst.

9. Nichttransitorischer Speicher (202) nach Anspruch 7, wobei das Öffnen der vorverknüpften Anwendung (501) das Öffnen der vorverknüpften Anwendung (501) unabhängig davon, ob eine andere Anwendung bereits geöffnet war, umfasst.

## Revendications

1. Appareil (200) comprenant :
un capteur de stylet (203) ;
un afficheur (204) ;
un circuit de commande (201) couplé de manière fonctionnelle au capteur de stylet (203) et à l'afficheur (204), le circuit de commande (201) dispose d'un mode-veille fonctionnant avec un afficheur sombre et d'un mode de fonctionnement actif, le circuit de commande (201) est configuré pour :
pré-associer une application la plus utilisée d'une pluralité d'applications à la détection d'une action de stylet prédéterminée qui se produit pendant que le circuit de commande (201) fonctionne en mode-veille, dans lequel la pré-association de l'application la plus utilisée est une association mise à jour automatiquement, où l'action de stylet prédéterminée est basée sur l'identification de celle parmi la pluralité d'applications qui est l'application la plus utilisée actuellement pour l'appareil ;
détecter, via le capteur de stylet (203), l'action de stylet prédéterminée pendant que le circuit de commande (201) fonctionne en mode-veille, et y répondre en ouvrant l'application la plus utilisée.

2. Appareil (200) selon la revendication 1 dans lequel l'action de stylet prédéterminée comprend un petit coup du stylet (401) sur l'afficheur (204).

3. Appareil (200) selon la revendication 1 dans lequel l'ouverture de l'application la plus utilisée comprend l'ouverture de l'application la plus utilisée indépendamment du fait qu'une autre application était déjà ouverte ou non.

4. Procédé comprenant les étapes consistant à :
par un circuit de commande (201) qui est couplé de manière fonctionnelle à un capteur de stylet (203) et à un afficheur (204), et pendant qu'il est dans un mode-veille fonctionnant avec un afficheur sombre :
détecter, via le capteur de stylet (203), une action de stylet prédéterminée ;
répondre en ouvrant une application pré-associée (501), dans lequel l'application pré-associée comprend une application la plus utilisée d'une pluralité d'applications ; où le circuit de commande est agencé pour mettre à jour automatiquement la pré-association sur la base de l'identification de l'application qui est l'application la plus utilisée actuellement pour l'appareil.

5. Procédé selon la revendication 4 dans lequel l'action de stylet prédéterminée comprend un petit coup du stylet (401) sur l'afficheur (204).

6. Procédé selon la revendication 4 dans lequel l'ouverture de l'application pré-associée (501) comprend l'ouverture de l'application pré-associée (501) indépendamment du fait qu'une autre application était déjà ouverte ou non.

7. Mémoire non transitoire (202) dans laquelle sont stockées des instructions informatiques pour amener un circuit de commande (201) à :
détecter, via un capteur de stylet (203), une action de stylet prédéterminée pendant que le circuit de commande (201) est dans un mode-veille fonctionnant avec un afficheur correspondant sombre, et y répondre en ouvrant une application pré-associée (501) via l'afficheur, dans lequel l'application pré-associée comprend une application déterminée comme étant une application la plus utilisée d'une pluralité d'applications ; et où est mise à jour dynamiquement une détermination de l'application qui est l'application la plus utilisée actuellement.

8. Mémoire non transitoire (202) selon la revendication 7 dans laquelle l'action de stylet prédéterminée comprend un petit coup du stylet (401) sur un afficheur (204).

9. Mémoire non transitoire (202) selon la revendication 7 dans laquelle l'ouverture de l'application pré-associée (501) comprend l'ouverture de l'application pré-associée (501) indépendamment du fait qu'une autre application était déjà ouverte ou non.
